# EUROPÄISCHE PATENTSCHRIFT

(11) **EP 3 479 902 B1**
(45) Veröffentlichungstag und Bekanntmachung des Hinweises auf die Patenterteilung: **24.06.2020**
(21) Anmeldenummer: 17200473.1
(22) Anmeldetag: 07.11.2017
(51) Int. Cl.: B03B 9/06, B03B 5/56

(54) **EINRICHTUNG ZUR WIEDERAUFBEREITUNG VON RESTBETON**
DEVICE FOR RECLAIMING WASTE CONCRETE
DISPOSITIF DE RETRAITEMENT DE BÉTON RÉSIDUEL

(43) Veröffentlichungstag der Anmeldung: 08.05.2019
(73) Patentinhaber: BIBKO Umwelt- und Reinigungstechnik GmbH, 71717 Beilstein (DE)
(72) Erfinder: BRENNER, Michael, 71717 Beilstein (DE)
(74) Vertreter: Clarenbach, Carl-Philipp

(56) Entgegenhaltungen:
- DE-C1- 19 527 464
- US-A- 6 161 559

## Beschreibung

Die Erfindung betrifft eine Einrichtung zur Wiederaufbereitung von Restbeton, mit einem Trog, der eine Trogwandung mit einem zumindest im Wesentlichen kreissegmentförmigen Querschnitt aufweist und sich axial von einer ersten Trogstirnwand, der eine Einfüllöffnung für den Restbeton zugeordnet ist, bis zu einer zweiten Trogstirnwand erstreckt, mit einer Förderspirale, die sich axial durch den Trog erstreckt und derart drehbar gelagert ist, dass sie im Normalbetrieb den Restbeton in Richtung der zweiten Trogstirnwand fördert und eine erste scheibenförmige Quertrennwand trägt, die beabstandet zu der ersten Trogstirnwand angeordnet ist und einen Radialabstand zu der Trogwandung aufweist, und mit zumindest einer Auslassöffnung in der Trogwandung, die in Förderrichtung der Förderspirale hinter der ersten Quertrennwand liegt. Wiederaufbereitungseinrichtungen für Restbeton sind aus dem Stand der Technik bereits bekannt. Sie dienen dazu, nicht verwendeten aber bereits angerührten Beton wieder in seine Bestandteile zu zerlegen, also insbesondere Beton beziehungsweise Festbestandteile von flüssigen Bestandteilen, insbesondere Wasserbestandteilen zu lösen, und damit den Restbeton wieder aufzubereiten für eine spätere Verwendung. Dies ist beispielsweise dann notwendig, wenn ein Betonmischer durch Hinzufügen von Wasser ausgespült wird. Der dann mit dem Wasser aus dem Betonmischer herausgespülte Restbeton wird dann in der nachgelagerten Einrichtung in seine Bestandteile aufgelöst und die festen Bestandteile vom (Spül-)Wasser getrennt. Aus Gründen des Umweltschutzes werden derartige Maßnahmen in immer stärkerem Maß erforderlich. Darüber hinaus ergibt sich der Vorteil, dass wiederaufbereiteter Restbeton erneut verwendet und verkauft werden kann, sodass es auch im Interesse der Industrie liegt, nicht verbrauchten Beton wieder aufzubereiten und erneut verwerten zu können.

Aus der Offenlegungsschrift DE 195 27 464 C1 oder DE 41 43 029 C2 ist beispielsweise bereits eine Einrichtung mit den Merkmalen des Oberbegriffs des Anspruchs 1 bekannt. Die Einrichtung weist eine Förderspirale auf, die sich in Längserstreckung eines Trogs erstreckt und durch eine Rotationsbewegung den Restbeton zusammen mit dem Wasser durch den Trog hindurch fördert. Mittels einer oder mehrerer Quertrennwände, die scheibenförmig ausgebildet und mit der Förderspirale mitdrehend angeordnet sind, erfolgt dabei eine Trennung der Festbestandteile vom Beton, unter anderem indem die Quertrennwand einen Radialabstand zur Trogwand aufweist und somit nur Festbestandteile hindurchlässt, welche kleiner sind als der Radialabstand. Eine weitere Trennung erfolgt durch ein Becherrad, das am Ende der Förderspirale in Förderrichtung liegt und aus dem Wasser-Betongemisch die Festbestandteile herausschöpft, mittels dafür vorgesehener Siebbecher, und auswirft oder einer Austragvorrichtung zuführt.

Der Erfindung liegt die Aufgabe zugrunde, eine Einrichtung der eingangs genannten Art und zu schaffen, welche eine verbesserte Wiederaufbereitung ermöglicht und insbesondere in einfacher Art und Weise eine verbesserte Trennung von Restbeton und Wasser gewährleistet.

Die der Erfindung zugrundeliegende Aufgabe wird durch eine Einrichtung mit den Merkmalen des Anspruchs 1 gelöst. Diese zeichnet sich dadurch aus, dass der ersten Quertrennwand gegenüberliegend ein von der Trogwandung in Richtung der Quertrennwand vorstehendes Leitelement zugeordnet ist, das sich nur über einen Teil der Trogwandung derart erstreckt, dass Festbestandteile des Restbetons an der Auslassöffnung vorbei transportiert werden. Unter einer Quertrennwand wird eine scheibenförmige Trennwand verstanden, die quer, also in einer Ebene senkrecht zur Drehachse der Förderspirale liegt und somit bei einer Drehung der Förderspirale ihre Ausrichtung zum Trog nicht verändert. In Förderrichtung ist das Leitelement somit der Auslassöffnung vorgeschaltet. Dadurch, dass es in Richtung der Quertrennwand vorsteht, verringert es den Radialabstand der Quertrennwand zu der Trogwandung, sodass an der Position des Leitelements ein Hindurchtreten von Festbestandteilen an der Quertrennwand vorbei erschwert oder vollständig verhindert wird. Dadurch, dass das Leitelement in der Förderrichtung gesehen vor der Auslassöffnung liegt, wird durch das Leitelement verhindert, dass Festbestandteile des Restbetons zu der Auslassöffnung gelangen. Dabei ist das Leitelement derart angeordnet, dass die Festbestandteile des Restbetons an der Auslassöffnung vorbeigeführt beziehungsweise vorbeitransportiert werden. Unter dem vorbei Transportieren der Festbestandteile ist also zu verstehen, dass die Festbestandteile unter Meidung der Auslassöffnung an der Auslassöffnung vorbei durch den Trog, insbesondere an der Trogwandung entlang transportiert werden. Insbesondere ist das Leitelement derart ausgebildet und/oder angeordnet, dass die Festbestandteile beabstandet zu der Auslassöffnung durch den Trog transportiert werden, insbesondere unterhalb der Auslassöffnung an dieser vorbei, sodass die Festbestandteile nicht in die Auslassöffnung gelangen können. Durch eine entsprechende Ausrichtung und Ausbildung des Leitelements wird gewährleistet, dass die Restbestandteile in dem Trog nicht durch die Förderspirale zu der Auslassöffnung geführt werden können. Vielmehr stellt das Leitelement ein Hindernis dar, das die Festbestandteile umgehen müssen, um in Förderrichtung weitertransportiert werden zu können. Hierdurch wird erreicht, dass keine Festbestandteile durch die Auslassöffnung mit dem ausgespülten Wasser verloren gehen und insbesondere weiter in Richtung der zweiten Trogstirnwand und eine dort optional vorgesehenen Einrichtung zum Entnehmen der Festbestandteile gefördert werden. Durch das Leitelement wird dem Restbeton also eine Zwangsführung geboten, welche verhindert, dass der Restbeton durch die Auslassöffnung ausströmt. Optional wird in den Trog zusätzlich Wasser eingespült, um die Förderung des Restbetons durch den Trog zu verbessern und eine Auflösung des Restbetons zu erleichtern. Zumindest dieses zusätzliche Wasser kann durch die Auslassöffnung austreten und wiederverwendet werden, ohne dass dabei Festbestandteile des Restbetons mitausgespült werden. Es ergibt sich somit sowohl in Bezug auf die Reinheit des ausgespülten Wassers als auch in Bezug auf die erhaltbare Restbetonmenge ein klarer Vorteil. Das Leitelement selbst ist kostengünstig und konstruktiv einfach gestaltbar und an der Trogwandung als separates Bauteil befestigbar oder als Festbestandteil der Trogwandung mit dieser einstückig ausbildbar. In jedem Fall ist die erfindungsgemäße Ausbildung der Einrichtung kostengünstig.

Gemäß einer bevorzugten Weiterbildung der Erfindung ist vorgesehen, dass sich das Leitelement einendig bis auf Höhe oder nahezu bis auf Höhe der Auslassöffnung erstreckt. Damit ist das Leitelement in Förderrichtung der Auslassöffnung direkt beziehungsweise axial gesehen vorgeschaltet. Dadurch ist sicher gewährleistet, dass die Festbestandteile an der Auslassöffnung vorbeigeleitet werden.

Weiterhin ist bevorzugt vorgesehen, dass sich das Leitelement anderendig zumindest bis zu einem Tiefpunkt der Trogwandung erstreckt. Unter dem Tiefpunkt der Trogwandung wird hierbei der tiefste Punkt im Querschnitt der Trogwandung verstanden. Dadurch wird erreicht, dass die Festbestandteile vom Restbeton um einen möglichst weiten Bogen um die Auslassöffnung herum geführt werden. Optional reicht das Leitelement bis in die Nähe des Tiefpunkts, jedoch nicht bis zum Tiefpunkt und auch nicht über den Tiefpunkt hinaus, sodass zumindest die Festbestandteile, die aufgrund ihrer Schwerkraft bereits am Tiefpunkt des Trogs liegen, von der Fördereinrichtung weiter axial in Richtung der zweiten Trogstirnwand gefördert werden können. Bei diesen Festbestandteilen wird davon ausgegangen, dass sie aufgrund ihres hohen Gewichts ohnehin nicht mehr zu der seitlich in der Trogwandung ausgebildeten Auslassöffnung gelangen werden.

Gemäß einer alternativen Ausführungsform der Erfindung ist bevorzugt vorgesehen, dass sich das Leitelement anderendig über den Tiefpunkt der Trogwandung hinaus erstreckt. Dies ist beispielsweise dann von Vorteil, wenn davon ausgegangen wird, dass der Restbeton vor allem viele leichte Festbestandteile aufweist.

Insbesondere erstreckt sich das Leitelement entlang der Trogwandung um 90°, vorzugsweise um weniger als 90°. Dabei endet es zumindest auf Höhe der Auslassöffnung. Die Erstreckung des Leitelements in Richtung des Tiefpunkts oder in Richtung der Auslassöffnung wird dabei insbesondere in Abhängigkeit von der axialen Entfernung des Leitelements zu der Auslassöffnung mitbestimmt, um eine sichere Umgehung der Auslassöffnung durch die Festbestandteile zu gewährleisten.

Gemäß einer bevorzugten Weiterbildung der Erfindung ist die radiale Höhe des Leitelements über die Längserstreckung des Leitelements gesehen zumindest im Wesentlichen gleich. Dadurch ist das Leitelement kostengünstig herstellbar und der gewünschte verbleibende radiale Abstand zwischen Leitelement und Quertrennwand sicher erreichbar. Vorzugsweise entspricht die radiale Höhe des Leitelements nahezu dem Radialabstand zwischen Quertrennwand und Trogwandung. Optional verändert sich die Höhe des Leitelements über dessen Längserstreckung, beispielsweise dann, wenn die Form des Querschnitts der Trogwandung von einer Kreisform abweicht. In diesem Fall wird dann durch das Leitelement der sich über den Umfang des Trogs verändernde Radialabstand zu der Quertrennwand kompensiert. Weitet sich beispielsweise der Trog nach oben mit einem vergrößerten Radius auf, so ist das Leitelement bevorzugt sichelförmig ausgebildet, mit einer nach oben zunehmenden Höhe, sodass stets der gleiche oder zumindest im Wesentlichen der gleiche Abstand zwischen Leitelement und Quertrennwand besteht. Besonders bevorzugt ist daher vorgesehen, dass sich die Höhe entlang des Leitelements derart verhält, dass der Radialabstand zwischen Leitelement und Quertrennwand gleich oder zumindest im Wesentlichen gleich ist.

Weiterhin ist bevorzugt eine in Förderrichtung hinten liegende Rückwand des Leitelements parallel zur Quertrennwand verlaufend ausgebildet. Dadurch ist gewährleistet, dass der gewünschte radiale Abstand zwischen Leitelement und Quertrennwand stets gewährleistet ist.

Weiterhin ist bevorzugt vorgesehen, dass eine in Förderrichtung vorne liegende Vorderwand des Leitelements parallel zu der Quertrennwand verlaufend ausgebildet ist. Damit weist das Leitelement insbesondere eine konstante Breite in seiner Längserstreckung auf, was eine einfache und kostengünstige Realisierung des Leitelements erlaubt.

Alternativ ist bevorzugt vorgesehen, dass das in Förderrichtung vorne liegende Vorderrad des Leitelements schräg zu der Quertrennwand ausgerichtet ist. Durch den schrägen Verlauf der Vorderwand ist insbesondere eine vereinfachte Führung der Festbestandteile in Richtung des Tiefpunkts der Trogwandung gewährleistet. Dazu verläuft die Vorderwand bevorzugt derart, dass das Leitelement in Richtung des Tiefpunkts spitz zuläuft, wodurch Festbestandteile bei einem Fördervorgang durch die Schräge automatisch in Richtung der Spitze des Leitelements und an diesem vorbei gefördert werden, ohne dass sich ein Verklemmen oder Stauen von Festbestandteilen an dem Leitelement ergeben kann.

Besonders bevorzugt erstreckt sich die axiale Breite des Leitelements daher in Richtung des dem Tiefpunkt zugewandten Endes, wodurch sich einerseits die schräge Vorderwand und bevorzugt die parallel zur Quertrennwand verlaufende Rückwand ergibt.

Bevorzugt ist die Förderspirale eine drehbar gelagerte Welle mit daran befestigten Gewindeschaufeln. Damit weist die Förderspirale nicht oder nicht unbedingt eine durchgehende Spirale auf, sondern insbesondere mehrere Gewindeschaufeln, die zusammen eine Spirale bilden, die durchgehend oder unterbrochen gestaltet sein kann. Je nachdem, welche Art von Restbeton wiederaufbereitet werden muss, können sich unterschiedliche Vorteile ergeben.

Die Welle der Förderspirale ist bevorzugt in zumindest einer der Trogstirnwände drehbar gelagert. Dazu weist die jeweilige Trogstirnwände bevorzugte eine Öffnung auf, durch welche die Welle hindurchgeschoben beziehungsweise geführt ist. Bevorzugt ist die Welle in der Öffnung gleitgelagert oder wälzkörpergelagert angeordnet. Außerhalb, also auf der von dem Trog abgewandten Seite einer der Trogstirnwände ist bevorzugt eine Antriebseinrichtung zum Antreiben der Welle beziehungsweise der Förderspirale angeordnet oder ankoppelbar. Bei der Antriebseinrichtung handelt es sich insbesondere um einen ansteuerbaren Elektromotor. Der Trog kann nach oben hin offen oder durch einen Deckel verschlossen beziehungsweise verschließbar ausgebildet sein. Die Welle liegt vorzugsweise oberhalb der Auslassöffnung, sodass gewährleistet ist, dass die Welle nicht in dem Wasser-Betongemisch liegt, wodurch beispielsweise keine zusätzlichen oder besonderen Dichtungen im Bereich der Lagerung der Welle in den Trogstirnwänden notwendig sind.

Weiterhin ist bevorzugt an der Welle eine zweite scheibenförmige Quertrennwand gehalten und der zweiten Trogstirnwand zugeordnet. Vorzugsweise weist auch die zweite Quertrennwand einen Radialabstand zu der Trogwandung auf, sodass Festbestandteile an der Quertrennwand vorbei in einen Raum zwischen Quertrennwand und zweiter Trogstirnwand gelangen können. Gemäß einer bevorzugten Weiterbildung ist zwischen der zweiten Quertrennwand und der zweiten Trogstirnwand, also in dem zuvor genannten Raum, ein Becherrad zum Ausschöpfen von Festbestandteilen aus dem Trog angeordnet und mit der Welle drehfest verbunden. Mittels des Becherrads sind die Festbestandteile aus dem in dem Trog verbliebenen Gemisch aus Wasser und Restbeton abschöpfbar und beispielsweise einer Austragsvorrichtung in Form einer Transportschnecke zuführbar. Vorzugsweise weist das Becherrad dazu mehrere Siebbecher auf, welche zum Aufnehmen und Abschöpfen der Festbestandteile ausgebildet sind. Insbesondere sind die Becher bevorzugt an der zweiten Quertrennwand angeordnet, sodass das Becherrad von der zweiten Quertrennwand mitgebildet wird. Hierdurch ergibt sich eine besonders kompakte Ausführungsform der Einrichtung.

Im Folgenden soll die Erfindung anhand der Zeichnung näher erläutert werden. Dazu zeigen
- Figur 1: eine vorteilhafte Einrichtung zur Wiederaufbereitung von Restbeton in einer vereinfachten Seitenansicht,
- Figur 2: die Einrichtung in einer perspektivischen Draufsicht,
- Figur 3: eine vereinfachte Querschnittsdarstellung der Einrichtung und
- Figuren 4A und 4B: unterschiedliche Ausführungsbeispiele der Einrichtung in vereinfachten Draufsichten.

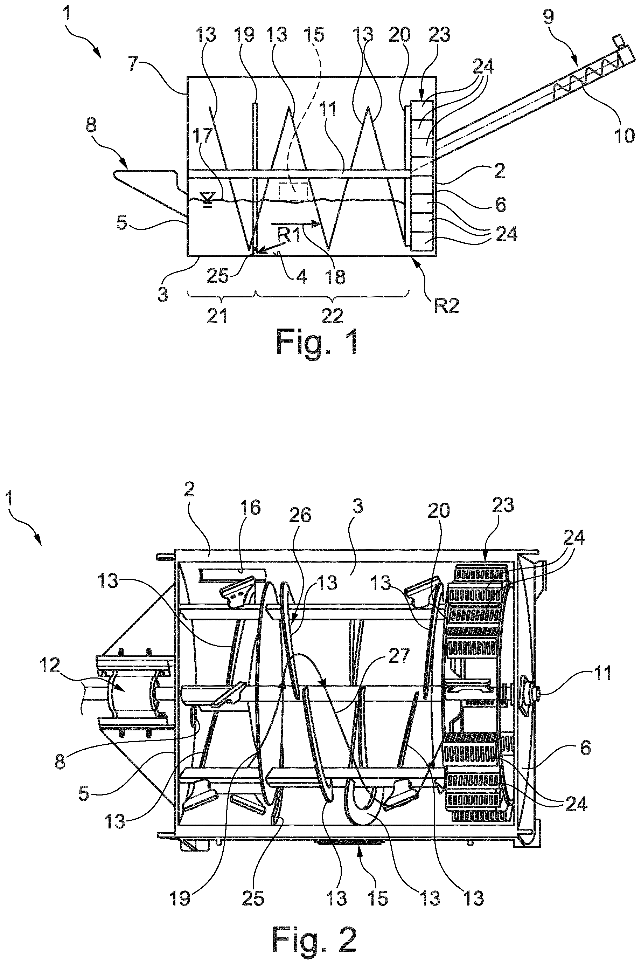

Figur 1 zeigt in einer vereinfachten Seitenansicht eine vorteilhafte Einrichtung 1 für die Wiederaufbereitung von Restbeton. Die Vorrichtung weist dazu einen Trog 2 auf, der beispielsweise einen kreissegmentförmigen Querschnitt aufweist, sodass sich eine Trogwandung 3 ergibt, die zumindest abschnittsweise kreisbogenförmig verläuft und einen mittigen Tiefpunkt 4 im Querschnitt aufweist, welcher den tiefsten Punkt des Trogs 2 im Normalbetrieb darstellt. Schwerkraftbedingt fließen oder bewegen sich somit feste oder flüssige Bestandteile, die in den Trog 2 eingefüllt werden, in Richtung des Tiefpunkts 4.

Die Trogwandung 3 wird stirnseitig durch eine erste Trogstirnwand 5 und eine zweite Trogstirnwand 6 begrenzt, sodass der Trog seitlich verschlossen ist. Nach oben hin kann der Trog 2 geöffnet oder durch einen in Figur 1 gezeigten optionalen Deckel 7 verschlossen sein.

Der ersten Trogstirnwand 5 ist eine Einfüllöffnung 8 zugeordnet, durch welche Restbeton in den Trog 2 einfüllbar ist. Der zweiten Trogstirnwand 6 ist optional eine Austragvorrichtung 9 zugeordnet, mittels welcher Festbestandteile aus dem Trog 2 ausgetragen werden können. Vorliegend ist die Austragvorrichtung 9 als Transportschnecke 10 ausgebildet.

In dem Trog 2 ist außerdem eine Welle 11 drehbar gelagert, die axial beziehungsweise in Längserstreckung des Trogs 2 ausgerichtet ist.

Figur 2 zeigt eine perspektivische Draufsicht auf die Einrichtung 1, mit entferntem Deckel 7, wobei erkennbar ist, dass die Welle 11 die Trogstirnwände 5 und 6 jeweils durchstößt und drehbar gelagert ist. Dazu weisen die Trogstirnwände 5, 6 Öffnungen auf, in welchen die Welle 11 bevorzugt unter Zwischenschaltung des Wälzkörperlagers gehalten ist. Alternativ ist zumindest ein Wellenende außerhalb des Trogs 2 durch ein an der Trogstirnwand 5 oder 6, vorliegend an der Trogstirnwand 5, gehaltenes Lager 12 geführt.

An der Welle 11 sind mehrere Gewindeschaufeln 13 befestigt, die sich mit der Welle 11 mitdrehen und bei einer Drehung in Normalrichtung eine Förderwirkung in Richtung der zweiten Trogstirnwand 6 bewirken. Die Normaldrehrichtung ist durch einen Pfeil 14 in Figur 2 angedeutet. Zusammen mit der Welle 11 bilden die Gewindeschaufeln eine Förderspirale 26 der Einrichtung 1.

In der Trogwandung 3 sind weiterhin eine Auslassöffnung 15 und eine weitere Einlassöffnung 16 ausgebildet. Durch die weitere Einlassöffnung 16 ist beispielsweise zusätzliches Wasser zum Ausspülen des Restbetons einbringbar, oder der Restbeton wird selbst durch die Einlassöffnung 16 in den Trog 2 eingeführt, wobei dann beispielsweise auch auf die Öffnung 8 verzichtet werden könnte, oder durch die Öffnung 8 Wasser hinzugefügt werden kann. Die Einlassöffnung 16 liegt vorteilhafterweise auf Höhe oder oberhalb der Welle 11 in der Trogwandung 3. Die Auslassöffnung 15 liegt zumindest bereichsweise unterhalb der Welle 11 in der Trogwandung 3, jedoch deutlich beabstandet zum Tiefpunkt 4, wie in Figur 1 beispielhaft angedeutet. Dort liegt die Auslassöffnung 15 knapp unterhalb der Welle 11 in der Trogwandung 3. Dadurch ist in der Trog 2 ein Wasserspiegel 17 erreichbar, der unterhalb der Welle 11 liegt, jedoch den unterhalb der Welle 11 liegenden Bereich des Trogs 2 zumindest im Wesentlichen ausfüllt. Nimmt der Wasserstand zu, so fließt das Wasser aus der Auslassöffnung 15 ab.

Während des Wiederaufbereitungsprozess wird die Welle 11 angetrieben, sodass durch die Einlassöffnung 8 oder 16 eingeführter Restbeton entlang des Trogs 2 gemäß Pfeil 18 in Richtung der zweiten Trogstirnwand 6 transportiert wird.

An der Welle 11 ist außerdem eine erste Quertrennwand 19 und eine zweite Quertrennwand 20 drehfest angeordnet. Die Quertrennwände 19, 20 sind kreisscheibenförmig ausgebildet und in jeweils einer Ebene senkrecht zur Drehachse der Welle 11 ausgerichtet, sodass sich ihre Ausrichtung bei einer Drehung der Welle 11 im Betrieb nicht verändert.

Die Quertrennwand 19 ist dabei beabstandet zu der ersten Trogstirnwand 5 angeordnet, sodass sich eine sogenannte Vorwaschkammer 21 ergibt. Die Quertrennwand 20 ist beabstandet zu der Quertrennwand 19 und beanstandet zu der Trogstirnwand 6 angeordnet, sodass sich zwischen den Quertrennwänden 19 und 20 eine Nachwaschkammer 22 ergibt, welcher die Auslassöffnung 15 zugeordnet ist. Dabei ist die Auslassöffnung 15 näher zu der ersten Quertrennwand 19 als zu der zweiten Quertrennwand 20 angeordnet.

Zwischen der zweiten Quertrennwand 20 und der Trogstirnwand 6 ist außerdem ein Becherrad 23 an der Welle 11 drehfest gehalten. Das Becherrad 23 weist eine Vielzahl von Siebbechern 24 auf, von denen in Figur 2 aus Übersichtlichkeitsgründen nicht alle gezeigt sind. Bei einer Drehung werden die Siebbecher 24 durch den Trog 2 gedreht, wobei der Bewegungsweg derart tief in den Trog 2 hineinreicht, dass auch kleine Festbestandteile, die am Boden des Trogs 2 beziehungsweise an dessen Tiefpunkt 4 liegen, von den Siebbechern 24 aufgenommen und nach oben in Richtung der Austragvorrichtung 9 transportiert werden können. Die Siebbecher 24 kippen oberhalb der Austragsvorrichtung 9 ihren Inhalt auf eine Aufnahme der Austragvorrichtung 9, sodass die Festbestandteile aus dem Trog 2 heraustransportiert und die Siebbecher für einen erneuten Schöpfvorgang entleert werden. Derartige Becherräder 23 sind grundsätzlich bekannt, sodass auf deren Funktion an dieser Stelle nicht näher eingegangen werden soll. Vorteilhafterweise sind die Siebbecher 24 jedoch an der Quertrennwand 20 befestigt, sodass die Quertrennwand 20 zusammen mit den Siebbechern 24 das Becherrad 23 bildet.

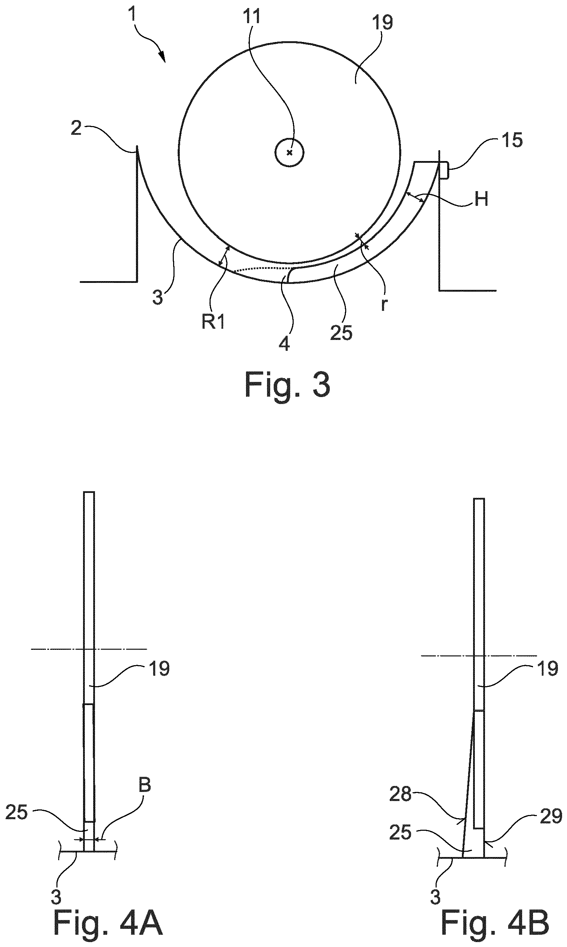

Während die Gewindeschaufeln 13 einen Außendurchmesser aufweisen, der dazu führt, dass die Gewindeschaufeln 13 Festbestandteile auch am Tiefpunkt 4 des Trogs 2 mitnehmen, weisen die Quertrennwände 19, 20 jeweils einen Radialabstand R1 beziehungsweise R2 zu der Trogwandung 3, zumindest am Tiefpunkt 4 auf. Ist die Trogwandung 3 in ihrem Querschnitt kreisbogenförmig ausgebildet, so erstreckt sich der Radialabstand R3, R2 über einen weiten Bereich der Trogwandung, vorzugsweise um etwa 180°, wie in Figur 3 beispielhaft gezeigt. Die Radialabstände R1 und R2 können gleich oder unterschiedlich groß sein.

Der ersten Quertrennwand 19 ist jedoch ein Leitelement 25 zugeordnet, welches den Radialabstand der Quertrennwand 19 zu der Trogwandung 3 zumindest bereichsweise verringert. Dies soll zunächst mit Bezug auf Figur 3 näher erläutert werden. Diese zeigt eine vereinfachte Querschnittsdarstellung durch die Einrichtung 1. An der Trogwandung 3 ist in Richtung der Quertrennwand 19 vorstehend das Leitelement 25 angeordnet und erstreckt sich etwa von Höhe der Auslassöffnung 15 bis nahe zu dem Tiefpunkt 4, sodass sich das Leitelement 25 um etwa 90° der Trogwandung beziehungsweise der Quertrennwand 19 erstreckt. Dabei ist die Höhe H des Leitelements 25 derart gewählt, dass der verbleibende radiale Abstand r zu der Quertrennwand 19 über die Längserstreckung des Leitelements 25 gesehen konstant ist. Weist also die Trogwandung 3 eine von einem Kreis abweichende Querschnittsform auf, so wird dies durch eine sich verändernde Höhe H des Leitelements 25 in seiner Längserstreckung kompensiert, sodass der Radialabstand R gleich bleibt. Alternativ weist das Leitelement 25 unabhängig von der Trogwandformung eine konstante Höhe H auf.

Durch das Leitelement 25 wird somit der radiale Abstand zu der Quertrennwand 19 bereichsweise verringert. Durch die vorteilhafte Ausbildung des Leitelements 25 wird erreicht, dass Festbestandteile des Restbetons, die aus der Vorwaschkammer 21 in die Nachwaschkammer 22 durch die Förderspirale 26 transportiert werden, nicht der Auslassöffnung 15 zugeführt werden können. Vielmehr wird durch das Leitelement 25 eine Zwangsführung für die Festbestandteile erreicht, welche diese in einem ausreichend weiten Abstand von der Auslassöffnung 15, insbesondere unterhalb der Auslassöffnung 15, durch den Trog 2 führen, insbesondere an der Trogwandung 3 entlang, wie durch einen Pfeil 27 in Figur 2 gezeigt, so dass diese nicht die Auslassöffnung 15 erreichen und durch diese aus dem Trog 2 entweichen können. Dadurch wird ein sauberes Trennen des überschüssigen Wassers und der Festbestandteile gewährleistet und vermieden, dass Festbestandteile aus dem Trog 2 unerwünscht durch die Auslassöffnung 15 entfernt werden. Vielmehr werden die Festbestandteile vollständig dem Becherrad 23 zugeführt, welches diese ausschöpft und der Austragvorrichtung 9 zuführt.

Optional kann sich das Leitelement 25 über den Tiefpunkt 4 hinaus erstrecken, wie durch gestrichelte Linien in Figur 3 gezeigt. Vorzugsweise verringert sich dabei die Höhe H des Leitelements 25 zu seinem dem Tiefpunkt 4 zugewandten Ende.

Figuren 4A und 4B zeigen unterschiedliche Ausführungsbeispiele des Leitelements 25 in einer vereinfachten Draufsicht auf die Quertrennwand 19 und das Leitelement 25. Gemäß dem Ausführungsbeispiel von Figur 4A ist vorgesehen, dass das Leitelement 25 zwei parallel zueinander verlaufende Seitenwände, die eine in Förderrichtung vorne liegende Vorderwand 28 und eine in Förderrichtung hinten liegende Rückwand 29 bilden, aufweist. Vorzugsweise sind diese parallel zu der Vorderwand und Rückwand der Quertrennwand 19 ausgerichtet.

Gemäß dem Ausführungsbeispiel von Figur 4B ist vorgesehen, dass die Vorderwand 28 schräg verläuft, sodass das Leitelement 25 in Längserstreckung gesehen eine Keilform aufweist beziehungsweise eine sich in Richtung des Tiefpunkts 4 verringernde Breite B. Dabei ist die Rückwand 29 weiterhin parallel zur Quertrennwand 19 ausgerichtet. Dadurch ergibt sich eine vorteilhafte Förderwirkung für die Festbestandteile, die durch die Förderspirale 26 gegen das Leitelement 25 gefördert werden. Insbesondere wird dadurch verhindert, dass die Festbestandteile zu einem Verklemmen der Förderspirale 26 führen können und sicher den gewünschten Weg durch den Trog 2 an der Auslassöffnung 13 vorbei folgen. In Abhängigkeit vom Abstand des Leitelements 25 zu der Auslassöffnung 15 ist dessen Längserstreckung über den Tiefpunkt hinaus anpassbar, um ein sicheres Umgehen der Auslassöffnung zu gewährleisten.

## Patentansprüche

1. Einrichtung (1) zur Wiederaufbereitung von Restbeton, mit einem Trog (2), der eine Trogwandung (3) mit einem zumindest im Wesentlichen kreissegmentförmigen Querschnitt aufweist und sich axial von einer ersten Trogstirnwand (5), der eine Einfüllöffnung (16) für den Restbeton zugeordnet ist, bis zu einer zweiten Trogstirnwand (6) erstreckt, mit einer Förderspirale (26), die sich axial durch den Trog (2) erstreckt und derart drehbar gelagert ist, dass sie im Normalbetrieb in Richtung der zweiten Trogstirnwand (6) fördert und eine erste scheibenförmige Quertrennwand (19) trägt, die beabstandet zu der ersten Trogstirnwand (5) angeordnet ist und einen Radialabstand zu der Trogwandung (3) aufweist, und mit zumindest einer Auslassöffnung (15) in der Trogwandung (3), die in Förderrichtung der Förderspirale (26) hinter der ersten Quertrennwand (19) oberhalb eines Tiefpunkts (4) der Trogwandung (3) liegt, **dadurch gekennzeichnet, dass** der ersten Quertrennwand (19) gegenüberliegend ein von der Trogwandung (3) in Richtung der Quertrennwand (19) vorstehendes Leitelement (25) zugeordnet ist, das sich nur über einen Teil der Trogwandung (3) derart parallel zu der Quertrennwand (19) erstreckt, dass Festbestandteile des Restbetons durch die Förderspirale (26) an der Auslassöffnung (15) vorbei transportiert werden.

2. Einrichtung nach Anspruch 1, **dadurch gekennzeichnet, dass** sich das Leitelement (25) einendig bis auf Höhe der Auslassöffnung (15) erstreckt.

3. Einrichtung nach einem der vorhergehenden Ansprüche, **dadurch gekennzeichnet, dass** sich das Leitelement (25) anderendig zumindest nahezu bis zu einem Tiefpunkt (4) der Trogwandung (3) erstreckt.

4. Einrichtung nach einem der vorhergehenden Ansprüche, **dadurch gekennzeichnet, dass** sich das Leitelement (25) um 90° oder weniger entlang der Trogwandung (3) erstreckt.

5. Einrichtung nach einem der vorhergehenden Ansprüche, **dadurch gekennzeichnet, dass** sich das Leitelement (25) über den Tiefpunkt (4) der Trogwandung (3) hinaus erstreckt.

6. Einrichtung nach einem der vorhergehenden Ansprüche, **dadurch gekennzeichnet, dass** sich eine radiale Höhe (H) des Leitelements (25) entlang des Leitelements (25) gleich oder zumindest im Wesentlichen gleich verhält.

7. Einrichtung nach einem der vorhergehenden Ansprüche, **dadurch gekennzeichnet, dass** die radiale Höhe (H) des Leitelements (25) derart ausgebildet ist, dass ein radialer Abstand (r) zwischen Leitelement (25) und erster Quertrennwand (19) stets gleich ist.

8. Einrichtung nach einem der vorhergehenden Ansprüche, **dadurch gekennzeichnet, dass** eine in Förderrichtung hinten liegende Rückwand (29) des Leitelements (25) parallel zur ersten Quertrennwand (19) verläuft.

9. Einrichtung nach einem der vorhergehenden Ansprüche, **dadurch gekennzeichnet, dass** eine in Förderrichtung vorne liegende Vorderwand (28) des Leitelements (25) parallel zur ersten Quertrennwand (19) verläuft.

10. Einrichtung nach einem der vorhergehenden Ansprüche, **dadurch gekennzeichnet, dass** die in Förderrichtung vorne liegende Vorderwand (28) des Leitelements (25) schräg zu der ersten Quertrennwand (19) ausgerichtet ist, sodass die Vorderwand (28) und die Rückwand (29) an dem dem Tiefpunkt (4) zugewandten Ende des Leitelements (25) spitz zulaufen.

11. Einrichtung nach einem der vorhergehenden Ansprüche, **dadurch gekennzeichnet, dass** sich eine axiale Breite (B) des Leitelements (25) in Richtung des dem Tiefpunkt (4) zugewandten Endes des Leitelements (25) reduziert.

12. Einrichtung nach einem der vorhergehenden Ansprüche, **dadurch gekennzeichnet, dass** die Förderspirale (26) eine drehbar gelagerte Welle (11) mit mehreren daran befestigten Gewindeschaufeln (13) ist.

13. Einrichtung nach einem der vorhergehenden Ansprüche, **dadurch gekennzeichnet, dass** an der Welle (11) eine zweite Quertrennwand (20) gehalten und der zweiten Trogstirnwand (6) zugeordnet ist und einen radialen Abstand zur Trogwandung (3) aufweist.

14. Einrichtung nach einem der vorhergehenden Ansprüche, **dadurch gekennzeichnet, dass** zwischen der zweiten Quertrennwand (20) und der zweiten Trogstirnwand (6) ein Becherrad (23) zum Ausschöpfen von Festbestandteilen aus dem Trog (2) an der Welle (11) angeordnet ist.

15. Einrichtung nach einem der vorhergehenden Ansprüche, **dadurch gekennzeichnet, dass** das Becherrad (23) von der zweiten Quertrennwand (20) und an der zweiten Quertrennwand (20) angeordneten Siebbechern (24) gebildet ist.

## Claims

1. Device (1) for recycling residual concrete, comprising a vat (2), which has a vat wall (3) having an at least substantially circle-segment-shaped cross section and extends axially from a first vat end wall (5), to which a filling opening (16) for the residual concrete is assigned, to a second vat end wall (6), comprising a feed screw (26) which extends axially through the vat (2) and is mounted rotatably in such a way that in normal operation it feeds towards the second vat end wall (6) and carries a first transverse partition wall (19), which is arranged at a distance from the first vat end wall (5) and has a radial distance from the vat wall (3), and comprising at least one outlet opening (15) in the vat wall (3), which is located downstream from the first transverse partition wall (19) in the feed direction of the feed screw (26), above a low point (4) of the vat wall (3), **characterised in that** a guide element (25), projecting from the vat wall (3) towards the transverse partition wall (19), is assigned opposite the first transverse partition wall (19) and extends parallel to the transverse partition wall (19) over only part of the vat wall (3) in such a way that solid constituents of the residual concrete are transported past the outlet opening (15) by the feed screw (26).

2. Device according to claim 1, **characterised in that** one end of the guide element (25) extends to the level of the outlet opening (15).

3. Device according to either of the preceding claims, **characterised in that** the other end of the guide element (25) extends at least almost as far as a low point (4) of the vat wall (3).

4. Device according to any of the preceding claims, **characterised in that** the guide element (25) extends along the vat wall (3) over 90° or less.

5. Device according to any of the preceding claims, **characterised in that** the guide element (25) extends beyond the low point (4) of the vat wall (3).

6. Device according to any of the preceding claims, **characterised in that** a radial height (H) of the guide element (25) remains identical or at least substantially identical along the guide element (25).

7. Device according to any of the preceding claims, **characterised in that** the radial height (H) of the guide element (25) is formed in such a way that a radial distance (r) between the guide element (25) and the first transverse partition wall (19) is always constant.

8. Device according to any of the preceding claims, **characterised in that** a rear wall (29), positioned downstream in the feed direction, of the guide element (25) extends parallel to the first transverse partition wall (19).

9. Device according to any of the preceding claims, **characterised in that** a front wall (28), positioned upstream in the feed direction, of the guide element (25) extends parallel to the first transverse partition wall (19).

10. Device according to any of the preceding claims, **characterised in that** the front wall (28), positioned upstream in the feed direction, of the guide element (25) is orientated oblique to the first transverse partition wall (19), in such a way that the front wall (28) and the rear wall (29) converge sharply at the end of the guide element (25) facing the low point (4).

11. Device according to any of the preceding claims, **characterised in that** an axial width (B) of the guide element (25) decreases towards the end of the guide element (25) facing the low point (4).

12. Device according to any of the preceding claims, **characterised in that** the feed screw (26) is a rotatably mounted shaft (11) comprising a plurality of threaded blades (13) fastened thereto.

13. Device according to any of the preceding claims, **characterised in that** a second transverse partition wall (20) is held on the shaft (11) and assigned to the second vat end wall (6) and is at a radial distance from the vat wall (3).

14. Device according to any of the preceding claims, **characterised in that** a bucket wheel (23) for extracting solid constituents from the vat (2) is arranged on the shaft (11), between the second transverse partition wall (20) and the second vat end wall (6).

15. Device according to any of the preceding claims, **characterised in that** the bucket wheel (23) is formed by the second transverse partition wall (20) and by sieve buckets (24) arranged on the second transverse partition wall (20).

## Revendications

1. Dispositif (1) de retraitement de béton résiduel, comportant une cuve (2), laquelle comporte une paroi de cuve (3) avec une section au moins sensiblement en forme d'arc de cercle et s'étend axialement depuis une première paroi frontale de cuve (5), à laquelle est ordonnée une ouverture de remplissage (16) pour le béton résiduel, jusqu'à une deuxième paroi frontale de cuve (6), comportant une hélice convoyeuse (26), laquelle s'étend axialement à travers la cuve (2) et est montée rotative de telle sorte qu'en fonctionnement normal elle convoie en direction de la deuxième paroi frontale de cuve (6) et porte une première paroi de séparation transversale en forme de disque (19), laquelle est agencée à distance de la première paroi frontale de cuve (5) et présente une distance radiale par rapport à la paroi de cuve (3), et comportant au moins une ouverture de sortie (15) dans la paroi de cuve (3), laquelle se trouve derrière la première paroi de séparation transversale (19) dans la direction de convoyage de l'hélice convoyeuse (26), au-dessus d'un point bas (4) de la paroi de cuve (3), **caractérisé en ce qu'**un élément de guidage (25) saillant de la paroi de cuve (3) en direction de la paroi de séparation transversale (19) est opposé et associé à la paroi de séparation transversale (19), lequel s'étend seulement sur une partie de la paroi de cuve (3) parallèlement à la paroi de séparation transversale (19) de telle sorte que des composants solides du béton résiduel sont transportés devant l'ouverture de sortie (15) par l'hélice convoyeuse (26).

2. Dispositif selon la revendication 1, **caractérisé en ce que** l'élément de guidage (25) s'étend à une extrémité jusqu'à la hauteur de l'ouverture de sortie (15).

3. Dispositif selon l'une des revendications précédentes, **caractérisé en ce que** l'élément de guidage (25) s'étend à l'autre extrémité au moins presque jusqu'à un point bas (4) de la paroi de cuve (3).

4. Dispositif selon l'une des revendications précédentes, **caractérisé en ce que** l'élément de guidage (25) s'étend sur 90° ou moins le long de la paroi de cuve (3).

5. Dispositif selon l'une des revendications précédentes, **caractérisé en ce que** l'élément de guidage (25) s'étend au-delà du point bas (4) de la paroi de cuve (3).

6. Dispositif selon l'une des revendications précédentes, **caractérisé en ce qu'**une hauteur radiale (H) de l'élément de guidage (25) est identique ou au moins sensiblement identique le long de l'élément de guidage (25).

7. Dispositif selon l'une des revendications précédentes, **caractérisé en ce que** la hauteur radiale (H) de l'élément de guidage (25) est réalisée de telle sorte qu'une distance radiale (r) entre l'élément de guidage (25) et la première paroi de séparation transversale (19) est toujours identique.

8. Dispositif selon l'une des revendications précédentes, **caractérisé en ce qu'**une paroi arrière (29) de l'élément de guidage (25) se trouvant derrière dans la direction de convoyage s'étend parallèlement à la première paroi de séparation transversale (19).

9. Dispositif selon l'une des revendications précédentes, **caractérisé en ce qu'**une paroi avant (28) de l'élément de guidage (25) se trouvant devant dans la direction de convoyage s'étend parallèlement à la première paroi de séparation transversale (19).

10. Dispositif selon l'une des revendications précédentes, **caractérisé en ce qu'**une paroi avant (28) de l'élément de guidage (25) se trouvant devant dans la direction de convoyage est orientée en biais par rapport à la première paroi de séparation transversale (19), de sorte que la paroi avant (28) et la paroi arrière (29) forment une pointe à l'extrémité de l'élément de guidage (25) tournée vers le point bas (4).

11. Dispositif selon l'une des revendications précédentes, **caractérisé en ce qu'**une largeur axiale (B) de l'élément de guidage (25) se réduit dans la direction de l'extrémité de l'élément de guidage (25) tournée vers le point bas (4).

12. Dispositif selon l'une des revendications précédentes, **caractérisé en ce que** l'hélice convoyeuse (26) est un arbre (11) monté rotatif et comportant plusieurs pales de filet (13) fixées à celui-ci.

13. Dispositif selon l'une des revendications précédentes, **caractérisé en ce que** sur l'arbre (11) une deuxième paroi de séparation transversale (20) est maintenue et associée à la deuxième paroi frontale de cuve (6) et présente une distance radiale par rapport à la paroi de cuve (3).

14. Dispositif selon l'une des revendications précédentes, **caractérisé en ce qu'**entre la deuxième paroi de séparation transversale (20) et la deuxième paroi frontale de cuve (6) une roue à godets (23) est agencée sur l'arbre (11) pour l'extraction de composants solides hors de la cuve (2).

15. Dispositif selon l'une des revendications précédentes, **caractérisé en ce que** la roue à godets (23) est formée par la deuxième paroi de séparation transversale (20) et par des godets à passoire (24) agencés sur la deuxième paroi de séparation transversale (20).
